# EUROPEAN PATENT APPLICATION

(11) **EP 4 821 708 A1**
(43) Date of publication of application: **14.10.2026**
(21) Application number: 26169194.3
(22) Date of filing: 30.03.2026
(51) Int. Cl.: B60C 19/00

(54) **PNEUMATIC TIRE**

(30) Priority: 09.04.2025 KR 20250046321
(71) Applicant: Kumho Tire Co., Inc., Gwangju 62392 (KR)
(72) Inventor: YOU, Youngbum, 62392 Gwangju (KR)
(74) Representative: BCKIP Part mbB

(57) **Abstract**

A pneumatic tire include: a tire body; and an electromagnetic tag disposed inside the tire body. The tire body includes: a belt; and a carcass supporting the belt. The carcass includes: a carcass main portion disposed inside the belt; and a carcass turn-up portion turned up from the carcass main portion and extending toward the belt at a position outward of the carcass main portion. The electromagnetic tag is disposed between an end of the belt and an end of the carcass turn-up portion.

## Description

### TECHNICAL FIELD

The present disclosure relates to a pneumatic tire.

### BACKGROUND OF THE INVENTION

Recently, in the tire industry, a technology of attaching a radio frequency identification (RFID) tag to a tire in order to track a manufacturing history, performance data, and use conditions of the tire is widely used. An electromagnetic tag may use a radio frequency to read and record tire information in a non-contact manner, thereby greatly improving efficiency of tire management. Such an electromagnetic tag is generally disposed inside a tire to be protected from an external environment, and needs to stably operate even against various physical stresses occurring during a manufacturing process and traveling of the tire.

An electromagnetic tag disposed in a conventional tire is disposed in a manner of being embedded in or attached to the inside of the tire. For example, in many cases, the electromagnetic tag is attached to an inner liner surface of the tire or inserted into a reinforcing layer of the tire.

However, if the position of the electromagnetic tag is inappropriate, then the electromagnetic tag is damaged by deformation or stress occurring during traveling of the tire, and a problem of a signal transmission/reception performance of the electromagnetic tag being degraded may occur.

In particular, a vicinity of a belt of the tire is known as a high deformation section, and if the electromagnetic tag is disposed too close to an end of the belt, then a possibility of damage caused by deformation occurring is high. Conversely, if disposed too far from the end of the belt, then a problem in which a signal transmission/reception efficiency of the electromagnetic tag is degraded occurred.

Furthermore, the electromagnetic tag needs to be protected from an external environment such as heat, moisture, and an impact occurring during a vulcanization process and traveling of the tire. In the related art, a method of coating and protecting an electromagnetic tag with a rubber material was used, but there was a problem in that a decrease in adhesive force or a durability issue occurred because physical and chemical properties of a coating material were different from those of other components of the tire (e.g., a belt topping rubber).

### SUMMARY OF THE INVENTION

Embodiments of the present disclosure provide a pneumatic tire preventing damage to an electromagnetic tag due to deformation of the tire by separating the electromagnetic tag from an end of a belt.

Furthermore, embodiments of the present disclosure provide a pneumatic tire preventing an electromagnetic tag from being separated or damaged during a vulcanization process and traveling of the tire by topping the outside of the electromagnetic tag with rubber.

In accordance with an embodiment of the present disclosure, there is provided a pneumatic tire including: a tire body; and an electromagnetic tag disposed inside the tire body, wherein the tire body includes: a belt; and a carcass supporting the belt, wherein the carcass includes: a carcass main portion disposed inside the belt; and a carcass turn-up portion turned up from the carcass main portion and extending toward the belt at a position outward of the carcass main portion, and wherein the electromagnetic tag is disposed between an end of the belt and an end of the carcass turn-up portion.

Further, the electromagnetic tag may be arranged to have a predetermined width and extend along a circumferential direction of the pneumatic tire, and a separation distance between the electromagnetic tag and the end of the belt may be greater than the width of the electromagnetic tag.

Further, the pneumatic tire may further include: a cap ply disposed on the belt at a radially outer side of the pneumatic tire to cover the belt, and the electromagnetic tag may be disposed between an end of the cap ply and the end of the carcass turn-up portion.

Further, the electromagnetic tag may be arranged to have a predefined width and extend along a circumferential direction of the pneumatic tire, and a separation distance between the electromagnetic tag and the end of the cap ply may be smaller than the width of the electromagnetic tag.

Further, the electromagnetic tag may be disposed at a distance ranging from 10 mm to 20 mm from the end of the belt.

Further, the tire body may further include: an inner liner supporting the carcass, and the electromagnetic tag may be disposed on an exposed surface of the inner liner.

Further, the electromagnetic tag may be disposed on an outer surface of the carcass main portion.

Further, the belt may include: a belt body having a steel cord; and a belt topping rubber coated on an outer surface of the belt body, the electromagnetic tag may include: a tag body having the same component as the belt body; and a tag topping rubber coated on an outer surface of the tag body, and the tag topping rubber may be formed of the same material as the belt topping rubber.

Further, the electromagnetic tag may further include a brass coating layer coated on the outer surface of the tag body, and the brass coating layer may have a weight ratio of copper to zinc ranging from 62:38 to 70:30.

According to embodiments of the present disclosure, physical damage to the electromagnetic tag may be minimized despite repetitive deformation occurring during traveling of the tire.

Furthermore, according to the embodiments of the present disclosure, the electromagnetic tag may be prevented from being separated or damaged during the vulcanization process and traveling of the tire by topping the outside of the electromagnetic tag with the rubber.

### BRIEF DESCRIPTION OF THE DRAWINGS

FIG. 1 is a cross-sectional view illustrating a pneumatic tire according to a first embodiment of the present disclosure, taken along a plane perpendicular to a circumferential direction of the pneumatic tire.
FIG. 2 is an enlarged view illustrating an enlargement of a portion A of FIG. 1.
FIG. 3 is a cross-sectional view taken along line III-III of FIG. 1.
FIG. 4 is a cross-sectional view illustrating a pneumatic tire according to a second embodiment of the present disclosure, taken along a plane perpendicular to the circumferential direction of the pneumatic tire.
FIG. 5 is a cross-sectional view taken along line V-V of FIG. 4.
FIG. 6 is a stress distribution diagram of the pneumatic tire of the present disclosure.
FIG. 7 is a stress distribution diagram of another pneumatic tire of the present disclosure.

### DETAILED DESCRIPTION OF THE INVENTION

Hereinafter, specific embodiments for implementing a technical idea of the present disclosure will be described in detail with reference to the drawings.

In describing the present disclosure, detailed descriptions of known configurations or functions may be omitted to clarify the present disclosure.

When an element is referred to as being 'connected' to, 'supported' by, 'accessed' to, 'supplied' to, 'transferred' to, or 'contacted' with another element, it should be understood that the element may be directly connected to, supported by, accessed to, supplied to, transferred to, or contacted with another element, but that other elements may exist in the middle.

The terms used in the present disclosure are only used for describing specific embodiments, and are not intended to limit the present disclosure. Singular expressions include plural expressions unless the context clearly indicates otherwise.

Further, in the present disclosure, it is to be noted that expressions, such as the upper side, the lower side, and the side surface, are described based on the illustration of drawings, but may be modified if directions of corresponding objects are changed. For the same reasons, some components are exaggerated, omitted, or schematically illustrated in the accompanying drawings, and the size of each component does not fully reflect the actual size.

Terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements, combinations, and/or groups thereof disclosed in the specification, and are not intended to preclude the possibility that one or more other certain features, areas, integers, steps, actions, elements, combinations, and/or groups thereof may exist or may be added.

Furthermore, as used herein, the term "axial direction" means a direction parallel to a rotation axis of the pneumatic tire 1, the term "circumferential direction" means a direction extending along a periphery of a surface of a tread perpendicular to the axial direction, and the term "radial direction" means a direction perpendicular to the rotation axis of the pneumatic tire 1. Meanwhile, unless otherwise specified, the directions encompass both a positive direction and a negative direction.

Hereinafter, a specific configuration of the pneumatic tire according to a first embodiment of the present disclosure will be described with reference to the drawings.

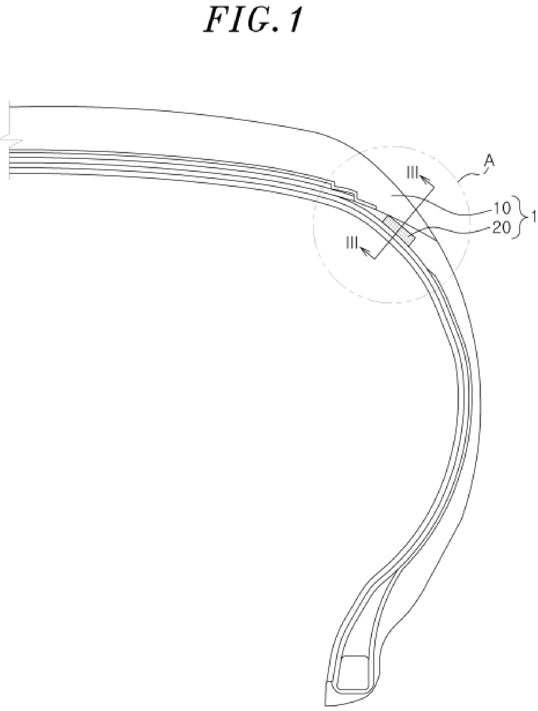

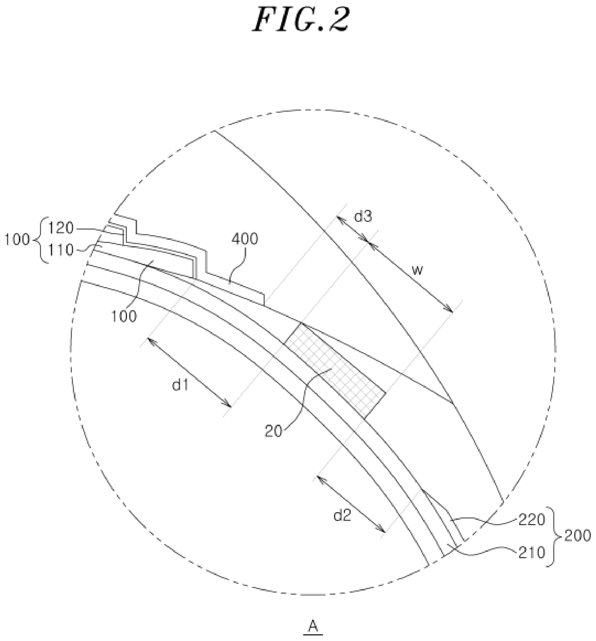

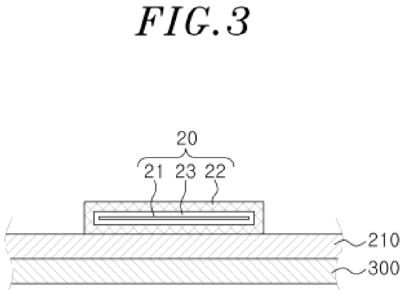

Referring to FIGS. 1 to 3, the pneumatic tire 1 according to the first embodiment of the present disclosure may be coupled to a vehicle to allow the vehicle to travel using friction generated at a portion in contact with a road surface. The pneumatic tire 1 may include a tire body 10 and an electromagnetic tag 20.

The tire body 10 may support the vehicle. The tire body 10 may be formed in a ring shape. The tire body 10 may have a surface of an elastic material. The tire body 10 may include a belt 100, a carcass 200, an inner liner 300, and a cap ply 400.

The belt 100 may distribute an impact applied to an outer surface of the tire body 10 from the outside such as a road surface. The belt 100 may be disposed between a tread and the carcass 200. Here, the tread may be a surface disposed on an outermost side of the tire body 10 and coming into direct contact with the ground. The belt 100 may be positioned on a radially inner side of the tread, and be positioned on a radially outer side of the carcass 200. The belt 100 may be supported by the carcass 200. The belt 100 may include a belt body 110 and a belt topping rubber 120.

The belt body 110 may be a support supporting the belt 100. The belt body 110 may be formed of a plurality of layers. The belt body 110 may include a plurality of steel cords. The belt body 110 may be formed of a material strong in fatigue resistance against a bending movement. The belt body 110 may be manufactured by a rolling process with the belt topping rubber 120. The belt topping rubber 120 may be coated on an outer surface of the belt body 110. The belt topping rubber 120 may be provided to improve an adhesive force between the belt body 110 and raw rubber of the tire body 10. The belt topping rubber 120 may include 4 to 10 parts by weight of zinc oxide, and 0.5 to 2 parts by weight of a cobalt salt, based on 100 parts by weight of the raw rubber. The zinc oxide of the belt topping rubber 120 may have a specific surface area of 4.0 m²/g to 8.5 m²/g.

The carcass 200 may support the belt 100. The carcass 200 may form a framework of the tire body 10. The carcass 200 may serve to support a load and absorb an impact by forming a cord layer inside the pneumatic tire 1. The carcass 200 may be formed of a material strong in fatigue resistance against a bending movement. For example, the carcass 200 may include a plurality of steel cords. The carcass 200 may form one layer. The carcass 200 forming one layer means the carcass 200 is formed as a single layer, not a plurality of layers divided in a radial direction of the tire. The carcass 200 may include a carcass main portion 210 and a carcass turn-up portion 220.

The carcass main portion 210 may be disposed inside the belt 100. The carcass main portion 210 may extend from the tread of the tire body 10 to a bead. The carcass main portion 210 may support the belt 100. The carcass main portion 210 may be supported by the inner liner 300. The carcass main portion 210 may be disposed between the belt 100 and the inner liner 300. The carcass main portion 210 may form a framework of the tire body 10.

The carcass turn-up portion 220 may be turned up to surround the bead. In the present specification, the carcass 200 being turned up means the carcass 200 extending toward a radially inner side of the tire is bent and extends toward a radially outer side of the tire so as to surround the bead. In this case, the carcass 200 may extend in a 'u' shape to surround the bead. The carcass turn-up portion 220 may extend from an end of the carcass main portion 210 extending to the bead. The carcass turn-up portion 220 may be turned up from the carcass main portion 210 and extend toward the belt 100 at a position outward of the carcass main portion 210.

The inner liner 300 may support the carcass 200. The inner liner 300 may be provided to maintain a pressure of air filled inside the pneumatic tire 1. The inner liner 300 may prevent the air of the pneumatic tire 1 from flowing out. The inner liner 300 may be disposed on an innermost side of the pneumatic tire 1, and be provided of a non-pneumatic material. For example, the inner liner 300 may be provided of high-density butyl rubber or the like.

The cap ply 400 may be disposed between the belt 100 and the tread. An end of the cap ply 400 may further extend outward than the end of the belt 100. The cap ply 400 may have an end bent a plurality of times to be seated on the end of the belt 100 formed of the layers. The cap ply 400 may be formed of a material strong in fatigue resistance against a bending movement. For example, the cap ply 400 may be formed of a material including at least one of nylon, polyester, or aramid (Kevlar).

The electromagnetic tag 20 may be disposed inside the tire body 10. The electromagnetic tag 20 may be disposed on an outer surface of the carcass main portion 210. The electromagnetic tag 20 may provide product information of the pneumatic tire 1, and the stored product information may be recognized from the outside. The electromagnetic tag 20 may be disposed between the end of the belt 100 and an end of the carcass turn-up portion 220. The electromagnetic tag 20 may be arranged to have a predefined width w and extend along a circumferential direction of the tire 1. The electromagnetic tag 20 may be disposed at a distance ranging from 10 mm to 20 mm from the end of the belt 100. For example, a separation distance d1 between the electromagnetic tag 20 and the end of the belt 100 may be greater than the width of the electromagnetic tag 20. Furthermore, a separation distance d2 between the electromagnetic tag 20 and the end of the carcass turn-up portion 220 may be smaller than the width of the electromagnetic tag 20. Furthermore, a separation distance d3 between the electromagnetic tag 20 and the end of the cap ply 400 may be smaller than the width of the electromagnetic tag 20. The electromagnetic tag 20 may include a tag body 21, a tag topping rubber 22, and a brass coating layer 23.

The tag body 21 may store code information for individual product identification of a tire 1. The tag body 21 may include a steel cord identical to the steel cord of the belt body 110. The tag body 21 may be a plate-shaped semiconductor. The tag body 21 may include a memory and an antenna. For example, the tag body 21 may include an antenna made of the same steel cord as that of the belt body 110. The tag body 21 may be an IC chip capable of wireless transmission. The tag body 21 may be a radio frequency identification (RFID) tag.

The tag topping rubber 22 may be coated on an outer surface of the tag body 21. The tag topping rubber 22 may be formed of the same material as the belt topping rubber 120. The tag topping rubber 22 may include 4 to 10 parts by weight of zinc oxide, and 0.5 to 2 parts by weight of a cobalt salt, based on 100 parts by weight of raw rubber of the tire body 10. The zinc oxide of the tag topping rubber 22 may have a specific surface area of 4.0 m²/g to 8.5 m²/g. The tag topping rubber 22 may have a hardness of 69 to 72 with a tolerance of ±2. The tag topping rubber 22 may have a 300% modulus value of 146 to 160 with a tolerance of ±15%. The tag topping rubber 22 may have a tensile strength of 200 kgf/cm² to 240 kgf/cm². The tag topping rubber 22 may have an elongation of 350% to 400%.

The brass coating layer 23 may be coated on the outer surface of the tag body 21. The brass coating layer 23 may be disposed between the tag body 21 and the tag topping rubber 22. The brass coating layer 23 may have a weight ratio of copper (Cu) to zinc (Zn) ranging from 62:38 to 70:30.

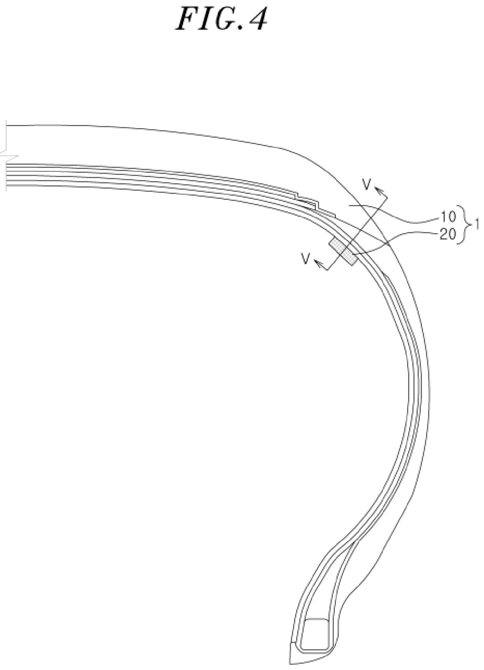

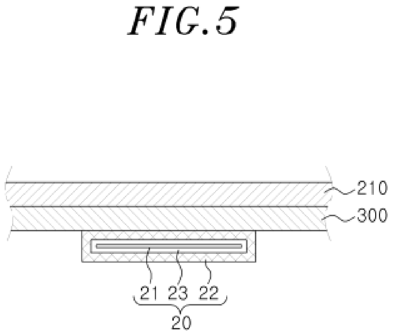

Meanwhile, in addition to such a configuration, a second embodiment of the present disclosure may be provided. Hereinafter, the second embodiment of the present disclosure will be described with reference to FIGS. 4 and 5. In describing the second embodiment, differences from the above-described embodiment will be mainly described, and the same description incorporates the above-described embodiment.

Referring to FIGS. 4 and 5, the electromagnetic tag 20 according to the second embodiment of the present disclosure may be disposed on an exposed surface of the inner liner 300. The electromagnetic tag 20 may be disposed on a radially inner side of the inner liner 300. For example, when disposed on the radially inner side of the inner liner 300, the electromagnetic tag 20 may be positioned between the end of the belt 100 and the end of the carcass turn-up portion 220.

Hereinafter, actions and effects of the pneumatic tire having the configuration as described above will be described.

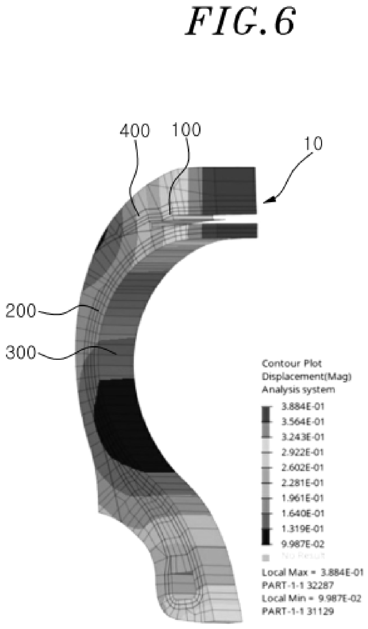

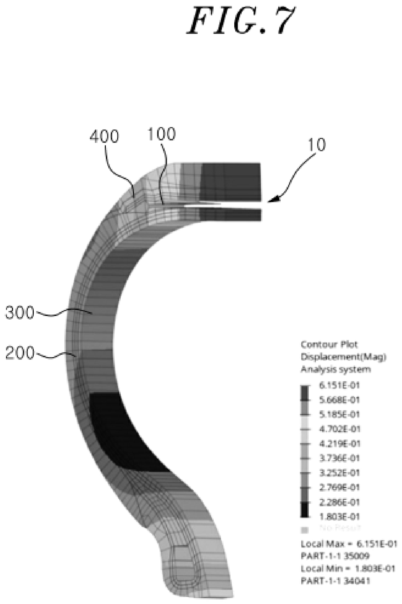

Referring to FIGS. 6 and 7, by being positioned between the end of the belt 100 and the end of the carcass turn-up portion 220, the electromagnetic tag 20 according to the embodiments of the present disclosure is disposed at a point having a relatively low stress distribution in the tire body 10, thereby having an effect of minimizing physical damage to the electromagnetic tag despite repetitive deformation occurring during traveling of the tire.

The electromagnetic tag 20 may prevent the electromagnetic tag 20 from being separated or damaged during the vulcanization process and traveling of the pneumatic tire by topping the outside of the tag body 21 with the tag topping rubber 22.

The brass coating layer 23 may be disposed on the tag body 21 and the tag topping rubber 22 made of different materials, thereby increasing an adhesive force between the tag body 21 and the tag topping rubber 22.

The examples of the present disclosure have been described above as specific embodiments, but these are only examples, and the present disclosure is not limited thereto, and should be construed as having the widest scope according to the technical spirit disclosed in the present specification. A person skilled in the art may combine/substitute the disclosed embodiments to implement a pattern of a shape that is not disclosed, but it also does not depart from the scope of the present disclosure. In addition, those skilled in the art can easily change or modify the disclosed embodiments based on the present specification, and it is clear that such changes or modifications also belong to the scope of the present disclosure.

## Claims

1. A pneumatic tire comprising:
a tire body; and
an electromagnetic tag disposed inside the tire body,
wherein the tire body includes:
a belt; and
a carcass supporting the belt,
wherein the carcass includes:
a carcass main portion disposed inside the belt; and
a carcass turn-up portion turned up from the carcass main portion and extending toward the belt at a position outward of the carcass main portion, and
wherein the electromagnetic tag is disposed between an end of the belt and an end of the carcass turn-up portion.

2. The pneumatic tire of claim 1, wherein the electromagnetic tag is arranged to have a predetermined width and extend along a circumferential direction of the pneumatic tire, and
wherein a separation distance between the electromagnetic tag and the end of the belt is greater than the width of the electromagnetic tag.

3. The pneumatic tire of claim 1, further comprising:
a cap ply disposed on the belt at a radially outer side of the pneumatic tire to cover the belt,
wherein the electromagnetic tag is disposed between an end of the cap ply and the end of the carcass turn-up portion.

4. The pneumatic tire of claim 3, wherein the electromagnetic tag is arranged to have a predefined width and extend along a circumferential direction of the pneumatic tire, and a separation distance between the electromagnetic tag and the end of the cap ply is smaller than the width of the electromagnetic tag.

5. The pneumatic tire of claim 1, wherein the electromagnetic tag is disposed at a distance ranging from 10 mm to 20 mm from the end of the belt.

6. The pneumatic tire of claim 1, wherein the tire body further comprises:
an inner liner supporting the carcass, and
wherein the electromagnetic tag is disposed on an exposed surface of the inner liner.

7. The pneumatic tire of claim 1, wherein the electromagnetic tag is disposed on an outer surface of the carcass main portion.

8. The pneumatic tire of claim 1, wherein the belt comprises a belt body including a steel cord, and a belt topping rubber coated on an outer surface of the belt body,
wherein the electromagnetic tag comprises a tag body including the same component as the belt body, and a tag topping rubber coated on an outer surface of the tag body, and
wherein the tag topping rubber is formed of the same material as the belt topping rubber.

9. The pneumatic tire of claim 8, wherein the electromagnetic tag further comprises a brass coating layer coated on the outer surface of the tag body, and the brass coating layer has a weight ratio of copper to zinc ranging from 62:38 to 70:30.
